# FASCICULE DE BREVET EUROPEEN

(11) **EP 1 798 524 B1**
(45) Date de publication et mention de la délivrance du brevet: **30.09.2009**
(21) Numéro de dépôt: 06126278.8
(22) Date de dépôt: 15.12.2006
(51) Int. Cl.: G01D 5/14

(54) **Capteur de position angulaire**
Winkelpositionssensor
Angular position sensor

(30) Priorité: 16.12.2005 ES 200502734 U
(43) Date de publication de la demande: 20.06.2007
(73) Titulaire: Zertan, S.A., 31132 Villatuerta (Navarra) (ES)
(72) Inventeur: Díez García, Sergio, 31151, OBANOS (NAVARRA) (ES); Creus Llorens, Francisco Javier, 31010, BARAÑAIN (NAVARRA) (ES)
(74) Mandataire: Intes, Didier Gérard André

(56) Documents cités:
- EP-A1- 0 217 478
- US-A- 6 166 655
- US-B1- 6 489 761

## Description

La présente invention concerne le contrôle du fonctionnement de mécanismes mobiles dans le secteur de l'automobile ou des applications similaires, en proposant un capteur permettant de contrôler la variation angulaire de tout mécanisme entre des angles prédéterminés.

### État de la technique

L'état actuel de la technique de l'automobile et d'autres applications similaires implique un contrôle exact des facteurs qui concernent le groupe de mécanismes en relation avec la sécurité et le bon fonctionnement du véhicule ou appareil correspondant.

De tels mécanismes doivent toujours fonctionner de manière efficace, de sorte qu'il ne soit jamais possible qu'un défaut de contrôle provoque un mauvais fonctionnement, ce qui, dans le cas des véhicules, pourrait avoir comme conséquence que des dommages se produisent sur le véhicule et un risque d'accident.

Dans les mécanismes de contrôle et de fonctionnement, il est nécessaire qu'il y ait des contrôleurs de la position angulaire de certains éléments et mécanismes, par rapport à une position de référence comme par exemple, dans le cas des véhicules, l'angle de débattement des portes, l'angle de la direction, les angles des pédales de commande, l'angle du véhicule lui-même par rapport à la position horizontale, etc.

Pour cette fonction, il est nécessaire de disposer de capteurs de position angulaire qui indiquent à tout moment la position relative dans laquelle se trouve le mécanisme ou l'élément d'application, par rapport à la position de référence prédéterminée, afin de pouvoir corriger cette position à l'aide d'un mécanisme de mouvement, de sorte qu'on détermine ainsi un correcteur dynamique de la position des mécanismes ou éléments correspondants, pour obtenir les meilleures conditions de fonctionnement et/ou de sécurité.

Il existe des capteurs qui sont capables de réaliser cette fonction, par exemple ceux décrits dans EP 0 217 478 A1 et US 6489761 B1, mais les réalisations existantes sont d'une technologie compliquée et d'une fabrication coûteuse, ce qui fait qu'ils sont généralement très chers.

### Objet de l'invention

Selon l'invention, il est proposé un détecteur formé par un dispositif électromécanique destiné à contrôler le mouvement angulaire, qui a été développé selon une réalisation à caractéristiques avantageuses du point de vue financier, du point de vue de la fabrication et du point de vue fonctionnel.

Ce dispositif objet de l'invention est défini dans la revendication 1 et comporte deux parties disposées axialement, l'une fixe et l'autre mobile, avec une mobilité rotative entre elles, l'une des parties intégrant un circuit magnétique constitué d'un ou plusieurs aimants permanents, tandis que l'autre partie comprend un ensemble électrique qui comprend un élément capteur magnétorésistif ou à effet Hall, associé à un circuit électronique capable de transformer les signaux de l'élément capteur en signaux électriques.

On obtient ainsi un dispositif dans lequel le mouvement relatif angulaire entre la partie fixe et la partie mobile donne lieu à une variation de l'influence magnétique du circuit magnétique sur la partie électrique, l'élément magnétorésistif, ou à effet Hall, générant en conséquence un signal qui est transformé par le circuit électronique en signal électrique permettant de déterminer, sur la base dudit signal, la variation angulaire produite entre les deux parties fixe et mobile.

Le circuit magnétique peut comprendre un ou plusieurs aimants permanents, en fonction de la puissance magnétique exigée par l'application sur laquelle va être utilisé le dispositif capteur, avec la possibilité de mettre en place plusieurs aimants reliés au moyen d'un élément métallique conducteur magnétique, ce qui permet d'améliorer le circuit magnétique en augmentant le champ magnétique d'action sur le dispositif.

Pour tout cela, le dispositif capteur angulaire objet de l'invention présente des caractéristiques de fabrication et des caractéristiques fonctionnelles très avantageuses, en étant indépendant et en s'avérant être un dispositif de choix dans l'application de contrôle angulaire pour laquelle il est conçu.

### Description des figures

La figure 1 montre en perspective une réalisation du dispositif capteur objet de l'invention avec un seul aimant dans le circuit magnétique.

La figure 2 est une vue en coupe d'une réalisation du dispositif capteur similaire à la précédente, avec deux aimants dans le circuit magnétique.

La figure 3 est une vue en plan dudit dispositif capteur de la figure précédente, avec la partie porteuse du circuit magnétique qui tourne par rapport à la partie qui intègre l'ensemble électrique.

La figure 4 est une vue en plan d'une réalisation du dispositif capteur avec une autre forme de montage de l'ensemble électrique.

La figure 5 est une perspective de ladite réalisation du dispositif capteur de la figure précédente.

La figure 6 est une vue en coupe partielle du dispositif capteur avec le circuit magnétique constitué de deux aimants reliés par un élément métallique.

Les figures 7 et 8 montrent en perspective deux exemples d'application du dispositif capteur préconisé, avec une coupe partielle des éléments extérieurs correspondants pour observer l'incorporation du dispositif.

### Description détaillée de l'invention

L'objet de l'invention se réfère à un dispositif destiné à contrôler la variation de position angulaire de tout élément ou mécanisme, en mesurant la variation d'influence du champ magnétique d'un système magnétique en fonction de l'angle de rotation par rapport à un élément capteur.

Le dispositif est constitué d'une carcasse annulaire (1) en matériau isolant électrique et magnétique, dans laquelle se trouve, de manière fixe, un ou plusieurs aimants permanents (2), ladite carcasse (1) étant disposée autour d'un ensemble électrique (3), selon un montage des deux parties (1 et 3), l'une mobile et l'autre fixe, avec une liberté de rotation relative entre elles.

L'ensemble électrique (3) comprend un élément capteur (4), magnétorésistif ou à effet Hall, associé à un circuit électronique qui est capable de transformer en signaux électriques les signaux que génère ledit élément détecteur (4).

Ainsi, selon ce qui précède, avec une des parties, par exemple la partie porteuse de l'ensemble électrique (3), associée à la structure fixe du lieu de montage d'un mécanisme mobile, et la carcasse (1) porteuse de l'aimant ou des aimants (2) associée au mécanisme mobile d'application, en établissant une position de référence entre le mécanisme mobile et la structure fixe, toute variation angulaire de la position du mécanisme mobile occasionne une variation de l'influence magnétique de l'aimant ou des aimants (2) sur l'élément capteur (4), celui-ci générant en réponse un signal qui est transmis au circuit électronique associé audit élément capteur (4).

Ledit signal de l'élément détecteur (4) est transformé par le circuit électronique en signal électrique, de telle sorte que, sur la base de celui-ci, il soit possible de déterminer, grâce à un appareil de mesure dudit signal électrique, la variation de la position angulaire du mécanisme mobile, ce qui permet de piloter automatiquement le mouvement dudit mécanisme mobile, par le contrôle mentionné effectué à l'aide du dispositif détecteur angulaire de l'invention.

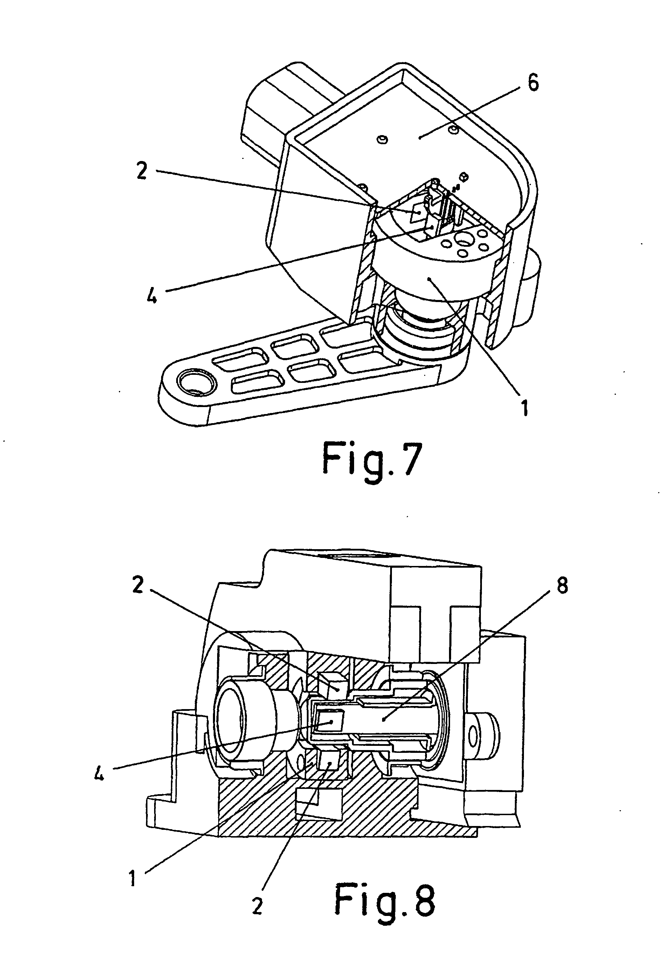

L'utilisation du dispositif préconisé, pour la fonction mentionnée, est applicable à tout mécanisme ou élément susceptible de changer de position angulaire, par exemple à un mécanisme de réglage de la position des phares d'un véhicule, comme représenté sur la figure 7, ou à un mécanisme de réglage de la position de la pédale d'accélérateur, comme représenté sur la figure 8, sans que ces applications ne soient en aucune façon limitatives.

La fonction du dispositif n'est pas altérée, et celui-ci reste par conséquent également inclus dans le concept de l'invention, avec une disposition fonctionnelle inverse, c'est-à-dire avec la carcasse (1) porteuse de l'aimant ou des aimants (2) placée de manière fixe et la partie porteuse de l'ensemble électrique (3) associée au mécanisme mobile à contrôler, puisque le concept fonctionnel requiert uniquement la mobilité angulaire relative entre les deux parties (1 et 3), pour mesurer la variation de l'influence magnétique de l'ensemble magnétique sur l'ensemble électrique par le mouvement relatif entre les deux parties.

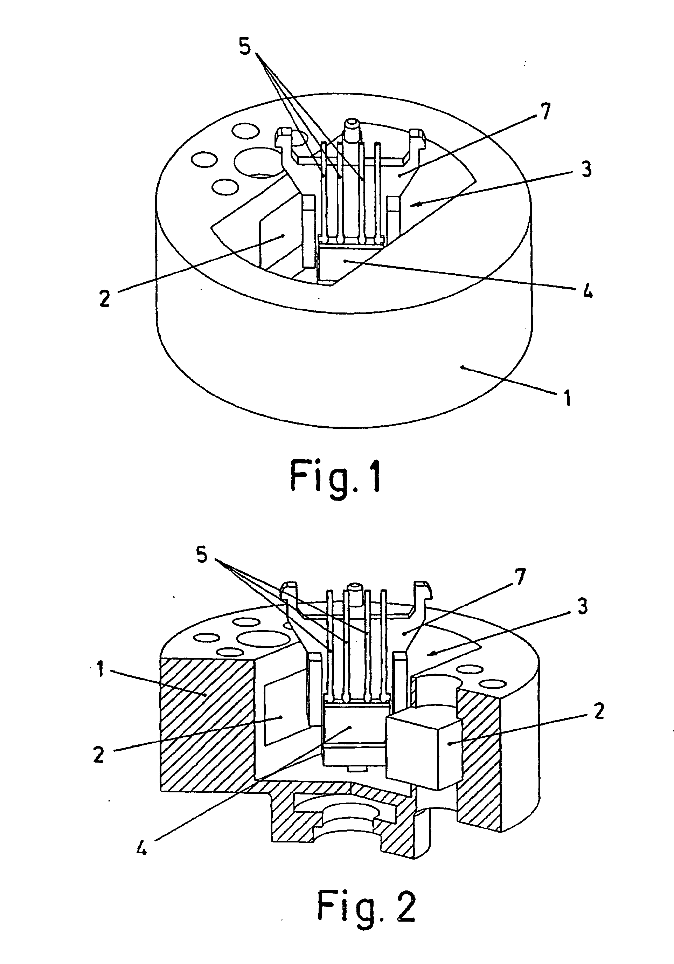

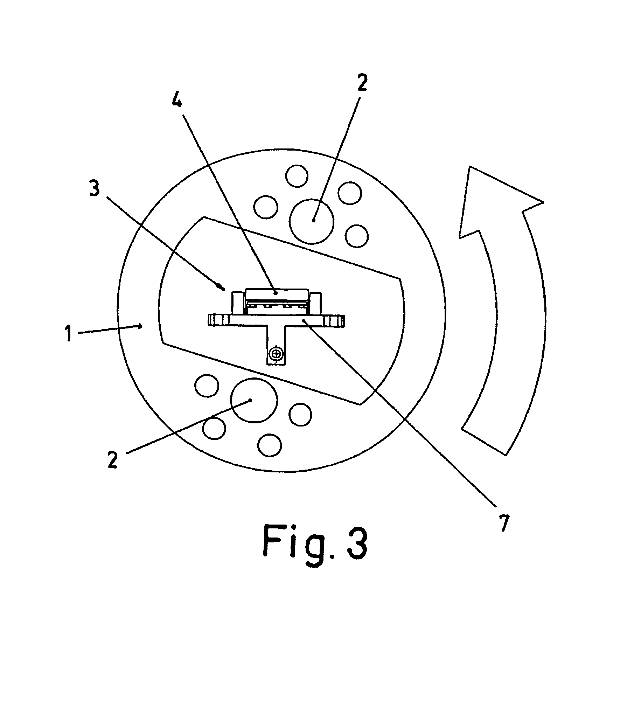

Selon un exemple de réalisation pratique de montage, l'élément capteur (4) du dispositif peut être connecté par des pattes de connexion (5) à un circuit électronique qui peut être intégré dans une plaque indépendante (6), par exemple à la façon d'un couvercle de fermeture, comme représenté sur la figure 7, le maintien de l'élément capteur (4) s'effectuant dans ce cas à l'aide d'un support isolant (7), comme dans la réalisation des figures 1 à 3.

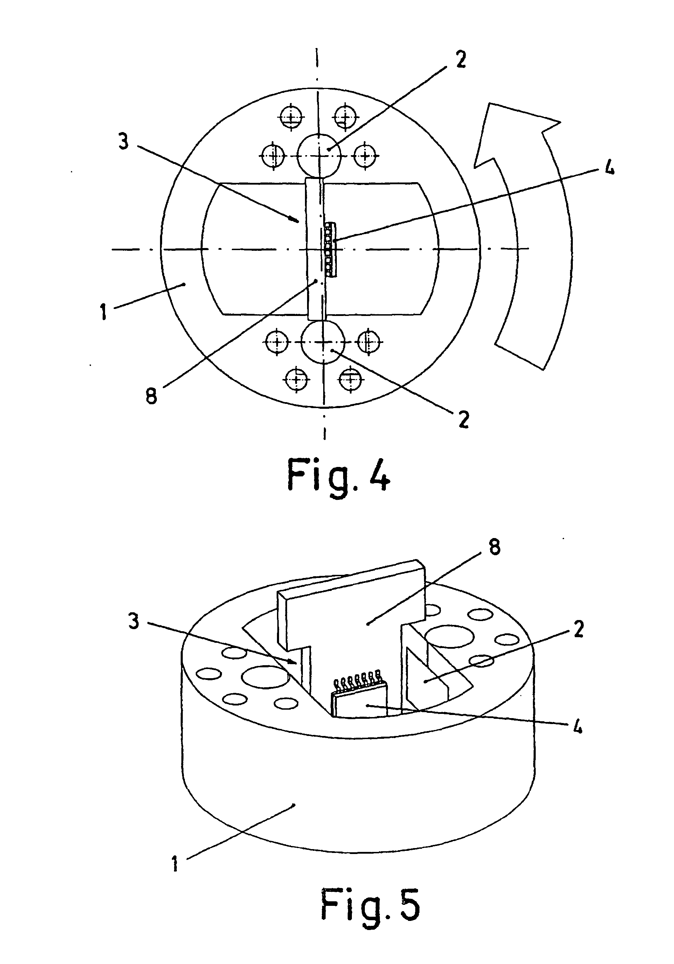

La disposition de l'élément capteur (4) peut également être effectuée (figures 4 et 5), selon un autre exemple de réalisation pratique, de manière à ne pas altérer le concept fonctionnel du dispositif, par connexion de l'élément capteur (4) sur une plaque (8) porteuse d'un circuit électronique primaire et qui sert de support pour ledit élément capteur (4), laquelle plaque (8) est à son tour connectée à un circuit électronique principal pour la transformation des signaux de l'élément capteur (4) en signaux électriques.

Le circuit magnétique intégré à la carcasse (1) peut comprendre un seul aimant permanent (2) disposé dans une position latérale par rapport à l'élément capteur (4), comme dans la réalisation de la figure 1, ou bien être constitué d'un ensemble d'aimants (2) disposés de manière symétrique par rapport à l'élément capteur (4), comme sur les figures 2 à 5, les aimants (2) de l'ensemble devant dans ce cas être disposés de manière à ce que leurs influences magnétiques sur l'élément capteur (4) s'ajoutent et non pas le contraire.

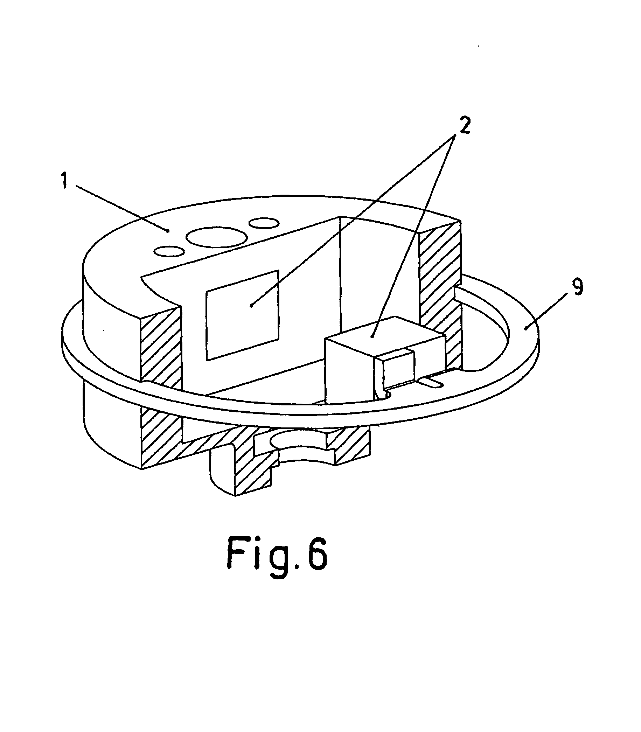

Dans une réalisation comme représentée sur la figure 6, le circuit magnétique peut être constitué d'un ensemble d'aimants (2) reliés au moyen d'un élément conducteur magnétique (9), ce qui permet d'améliorer le circuit magnétique en augmentant le champ magnétique d'action sur le dispositif.

## Revendications

1. Capteur de position angulaire, du type comprenant une partie magnétique et une partie électrique disposées dans un montage avec mouvement relatif entre elles, pour que la partie électrique génère des signaux de réponse aux variations d'influence magnétique liées au mouvement relatif entre les deux parties, ce capteur comprenant une carcasse annulaire (1) en matériau isolant, un ensemble magnétique formé par au moins un aimant permanent (2), un ensemble électrique (3) qui possède un élément capteur (4) magnétorésistif ou à effet Hall étant associé à un circuit électronique capable de transformer les signaux de celui-ci en signaux électriques, selon une disposition de montage avec liberté de rotation relative entre les deux parties (1 et 3), afin de mesurer les variations de la position angulaire relative par la variation de l'influence magnétique sur l'élément capteur (4) due à la rotation, ce capteur étant **caractérisé en ce que** ledit ensemble magnétique est intégré dans ladite carcasse annulaire (1) et **en ce que** ledit élément capteur (4) est inclus axialement par rapport à ladite carcasse (1).

2. Capteur de position angulaire selon la revendication 1, dans lequel l'élément capteur (4) de l'ensemble électrique (3) est connecté au moyen de pattes (5) à une plaque indépendante (6) dans laquelle est intégré le circuit électronique de transformation des signaux, l'élément capteur (4) étant incorporé sur un support de maintien (7).

3. Capteur de position angulaire selon la revendication 1, dans lequel l'élément capteur (4) de l'ensemble électrique (3) est connecté à un circuit électronique primaire qui est connecté à un autre circuit électronique principal, l'élément capteur (4) étant incorporé sur une plaque (8) qui sert de support de maintien et qui intègre le circuit électronique primaire de connexion.

4. Capteur de position angulaire selon l'une quelconque des revendications 1 à 3, dans lequel l'ensemble magnétique intégré à la carcasse annulaire (1) comprend un aimant permanent (2) disposé dans une position latérale par rapport à l'élément capteur (4) de l'ensemble électrique (3).

5. Capteur de position angulaire selon l'une quelconque des revendications 1 à 3, dans lequel l'ensemble magnétique intégré à la carcasse annulaire (1) comprend au moins deux aimants (2) disposés de manière symétrique par rapport à l'élément capteur (4) de l'ensemble électrique (3) et dans une position correspondante entre eux pour que leurs influences magnétiques sur l'élément capteur (4) s'ajoutent.

6. Capteur de position angulaire selon l'une quelconque des revendications 1 à 3, dans lequel l'ensemble magnétique intégré à la carcasse annulaire (1) comprend au moins deux aimants (2) disposés de manière symétrique par rapport à l'élément capteur (4) de l'ensemble électrique (3) et reliés entre eux au moyen d'un élément conducteur (9).

7. Capteur de position angulaire selon l'une quelconque des revendications 1 à 6, dans lequel la partie porteuse de l'ensemble électrique (3) est fixe et la carcasse annulaire (1) porteuse de l'aimant ou des aimants (2) est mobile.

8. Capteur de position angulaire selon les revendications 2 et 7, dans lequel la carcasse annulaire (1), l'ensemble magnétique et l'ensemble électrique (3) sont logés dans un boîtier, ladite plaque indépendante (6) formant un couvercle de fermeture de ce boîtier.

## Claims

1. An angular position sensor of the type comprising a magnetic portion and an electric portion placed free to move relative to each other in an assembly, in such a manner that the electric portion generates signals in response to the variations in magnetic influence that are associated with relative movement between the two portions, the sensor comprising an annular casing (1) of insulating material, a magnetic unit formed of at least one permanent magnet (2), and an electric unit (3) possessing a magnetoresitive or a Hall effect sensor element (4) in association with an electronic circuit capable of transforming the signals therefrom into electrical signals, together forming an assembly with freedom for the two portions (1 and 3) to move in relative rotation in order to measure variations of relative angular position by the variation in the magnetic influence on the sensor element (4) due to rotation, the sensor being **characterized in that** said magnetic unit is incorporated in said annular casing (1) and **in that** said sensor element (4) is included axially relative to said casing (1).

2. An angular position sensor according to claim 1, wherein the sensor element (4) of the electric unit (3) is connected by means of tabs (5) to an independent plate (6) in which the electronic signal-transformation integrated circuit is incorporated, said sensor element (4) being incorporated on a holder support (7).

3. An angular position sensor according to claim 1, wherein the sensor element (4) of the electric unit (3) is connected to a primary electronic circuit that is connected to another electronic circuit constituting a main circuit, the sensor element (4) being incorporated on a plate (8) that acts as a holder support and that incorporates the connection primary electronic circuit.

4. An angular position sensor according to any one of claims 1 to 3, wherein the magnetic unit incorporated in the annular casing (1) comprises a permanent magnet (2) disposed in a lateral position relative to the sensor element (4) of the electric unit (3).

5. An angular position sensor according to any one of claims 1 to 3, wherein the magnetic unit incorporated in the annular casing (1) comprises at least two magnets (2) disposed in symmetrical manner about the sensor element (4) of the electric unit (3) and in mutually corresponding positions so that their magnetic influences on the sensor element (4) add.

6. An angular position sensor according to any one of claims 1 to 3, wherein the magnetic unit incorporated in the annular casing (1) comprises at least two magnets (2) disposed symmetrically relative to the sensor element (4) of the electric unit (3) and interconnected by means of a conductor element (9).

7. An angular position sensor according to any one of claims 1 to 6, wherein the portion carrying the electric unit (3) is stationary and the annular casing (1) carrying the magnet(s) (2) is movable.

8. An angular position sensor according to claims 2 and 7, wherein the annular casing (1), the magnetic unit, and the electric unit (3) are housed in a housing, said independent plate (6) forming a cover for closing the housing.

## Patentansprüche

1. Winkelpositionsgeber vom Typ umfassend einen magnetischen Teil und einen elektrischen Teil, die mit Relativbewegung zueinander angeordnet sind, damit der elektrische Teil Antwortsignale auf die mit der Relativbewegung zwischen den beiden Teilen verbundenen Änderungen der magnetischen Influenz erzeugt, wobei dieser Geber folgendes umfaßt, nämlich ein ringförmiges Gehäuse (1) aus Isoliermaterial, eine magnetische Einheit, die von wenigstens einem Permanentmagneten (2) gebildet ist, eine elektrische Einheit (3), die ein magnetoresistives oder Hall-Geberelement (4) besitzt, das einem elektronischen Schaltkreis zugeordnet ist, der geeignet ist, die Signale des Geberelements, entsprechend einer Anordnung mit relativer Drehfreiheit zwischen den beiden Teilen (1 und 3), in elektrische Signale umzuwandeln, um die Änderungen der relativen Winkelposition durch die auf die Drehung zurückzuführende Änderung der magnetischen Influenz auf das Geberelement (4) zu messen, wobei dieser Geber **dadurch gekennzeichnet ist, daß** die magnetische Einheit in das ringförmige Gehäuse (1) integriert ist und daß das Geberelement (4) in bezug auf das Gehäuse (1) axial aufgenommen ist.

2. Winkelpositionsgeber nach Anspruch 1, bei dem das Geberelement (4) der elektrischen Einheit (3) mittels Laschen (5) mit einer unabhängigen Platte (6) verbunden ist, in die der elektronische Schaltkreis zur Umwandlung der Signale integriert ist, wobei das Geberelement (4) an einem Halter (7) eingebaut ist.

3. Winkelpositionsgeber nach Anspruch 1, bei dem das Geberelement (4) der elektrischen Einheit (3) mit einem elektronischen Primärkreis verbunden ist, der mit einem weiteren elektronischen Hauptkreis verbunden ist, wobei das Geberelement (4) an einer Platte (8) eingebaut ist, die als Halter dient und in die der elektronische Primärverbindungskreis integriert ist.

4. Winkelpositionsgeber nach einem der Ansprüche 1 bis 3, bei dem die in das ringförmige Gehäuse (1) integrierte magnetische Einheit einen Permanentmagneten (2) umfaßt, der bezogen auf das Geberelement (4) der elektrischen Einheit (3) in einer seitlichen Position angeordnet ist.

5. Winkelpositionsgeber nach einem der Ansprüche 1 bis 3, bei dem die in das ringförmige Gehäuse (1) integrierte magnetische Einheit wenigstens zwei Magneten (2) umfaßt, die zu dem Geberelement (4) der elektrischen Einheit (3) symmetrisch und in einer entsprechenden Position untereinander angeordnet sind, damit sich ihre magnetischen Influenzen auf das Geberelement (4) addieren.

6. Winkelpositionsgeber nach einem der Ansprüche 1 bis 3, bei dem die in das ringförmige Gehäuse (1) integrierte magnetische Einheit wenigstens zwei Magneten (2) umfaßt, die zu dem Geberelement (4) der elektrischen Einheit (3) symmetrisch angeordnet und mittels eines leitenden Elements (9) untereinander verbunden sind.

7. Winkelpositionsgeber nach einem der Ansprüche 1 bis 6, bei dem der die elektrische Einheit (3) tragende Teil fest ist und das den oder die Magneten (2) tragende ringförmige Gehäuse (1) beweglich ist.

8. Winkelpositionsgeber nach einem der Ansprüche 2 und 7, bei dem das ringförmige Gehäuse (1), die magnetische Einheit und die elektrische Einheit (3) in einem Gehäuse untergebracht sind, wobei die unabhängige Platte (6) einen Deckel zum Verschließen dieses Gehäuses bildet.
